# EUROPÄISCHE PATENTSCHRIFT

(11) **EP 2 027 640 B1**
(45) Veröffentlichungstag und Bekanntmachung des Hinweises auf die Patenterteilung: **19.01.2011**
(21) Anmeldenummer: 07725696.4
(22) Anmeldetag: 31.05.2007
(51) Int. Cl.: H02K 3/52

(54) **SPULENMODUL FÜR EINEN STATOR EINES ELEKTROMOTORS, STATOR, ELEKTROMOTOR, UMWÄLZPUMPE UND VERFAHREN ZUR HERSTELLUNG EINES STATORS**
COIL MODULE FOR A STATOR OF AN ELECTRIC MOTOR, STATOR, ELECTRIC MOTOR, CIRCULATING PUMP AND METHOD FOR MANUFACTURING A STATOR
MODULE DE BOBINE POUR UN STATOR D'UN MOTEUR ÉLECTRIQUE, STATOR, MOTEUR ÉLECTRIQUE, POMPE DE RECIRCULATION ET PROCÉDÉ DE FABRICATION D'UN STATOR

(30) Priorität: 02.06.2006 DE 102006026681
(43) Veröffentlichungstag der Anmeldung: 25.02.2009
(73) Patentinhaber: ITT Manufacturing Enterprises, Inc., Wilmington, DE 19801 (US)
(72) Erfinder: LAING, Karsten, 71566 Alttütte (DE)
(74) Vertreter: Hoeger, Stellrecht & Partner Patentanwälte
(86) Internationale Anmeldenummer: PCT/EP2007/004809
(87) Internationale Veröffentlichungsnummer: WO 2007/140919

(56) Entgegenhaltungen:
- EP-A- 1 437 819
- WO-A-2004/042891
- US-A1- 2006 071 569

## Beschreibung

Die Erfindung betrifft ein Spulenmodul für einen Stator eines Elektromotors.

Die Erfindung betrifft ferner einen Stator für einen Elektromotor.

Weiterhin betrifft die Erfindung einen Elektromotor.

Die Erfindung betrifft weiterhin eine Umwälzpumpe.

Weiterhin betrifft die Erfindung ein Verfahren zur Herstellung eines Stators.

Aus der EP 1 416 607 A2 ist ein Elektromotor bekannt, welcher einen Läufer (Rotor) und einen Stator umfasst, wobei der Läufer sphärisch gelagert ist und dem Stator zugewandt sphärisch ausgebildet ist. Der Stator weist einen magnetischen Rückschlusskörper auf, welcher aus einem gepressten Pulvermaterial hergestellt ist. Der Rückschlusskörper ist dem Läufer zugewandt mindestens segmentweise sphärisch ausgebildet.

Aus der US 2006/0071567 ist ein Spulenmodul bekannt, welche Zwei Teile und einen ersten Steg und einen zweiten Steg umfasst.

Der Erfindung liegt die Aufgabe zugrunde, ein Spulenmodul bereitzustellen, mit dessen Hilfe sich ein Stator auf einfache Weise herstellen lässt.

Diese Aufgabe wird bei einem Spulen modul für einen Stator eines Elektromotors erfindungsgemäß dadurch gelöst, dass ein Spulenhalter vorgesehen ist, eine Spule vorgesehen ist, welche an dem Spulenhalter angeordnet ist, ein erster Steg vorgesehen ist und ein zweiter Steg vorgesehen ist, wobei zwischen dem ersten Steg und dem zweiten Steg ein erster Spulenabschnitt und ein zweiter Spulenabschnitt zur Kontaktierung mit einer Motorschaltung liegen.

Die Spule lässt sich auf einfache Weise an dem Spulenhalter insbesondere über Wicklung herstellen. Die Spule wiederum lässt sich über den ersten Spulenabschnitt und den zweiten Spulenabschnitt, welcher an dem ersten Steg und dem zweiten Steg gehalten ist, auf einfache Weise mit Kontaktstellen der Motorschaltung in elektrischen Kontakt bringen. Das Spulenmodul lässt sich beispielsweise auf Haltestifte eines Rückschlusskörpers aufsetzen, wobei bei entsprechender Anordnung der Kontaktstellen die Spulenabschnitte bereits an den Kontaktstellen anliegen. Diese lassen sich dann von oben her beispielsweise durch Verschweißung oder Verlötung mit den Kontaktstellen in elektrische Verbindung bringen.

Über das erfindungsgemäße Spulenmodul lässt sich ein Stator mit hohem Automatisierungsgrad herstellen. Insbesondere ist eine elektrische Kontaktierung von Spulen mittels eines Roboters wie beispielsweise eines Schweißroboters möglich.

Günstig ist es, wenn die Spule an dem Spulenhalter gewickelt ist. Dadurch lässt sich die Spule auf einfache Weise herstellen.

Insbesondere ist der Spulenhalter so ausgebildet, dass die Spule mittels einer Wicklungsmaschine an dem Spulenhalter herstellbar ist. Dadurch lässt sich das Spulenmodul mit hohem Automatisierungsgrad herstellen.

Günstig ist es, wenn der erste Spulenabschnitt im Bereich eines ersten Drahtendes der Spule liegt. Dadurch lässt sich der Spulenabschnitt auf einfache Weise zwischen dem ersten Steg und dem zweiten Steg herstellen und es lässt sich auf einfache Weise eine Kontaktierung herstellen.

Aus dem gleichen Grund ist es günstig, wenn der zweite Spulenabschnitt im Bereich eines zweiten Drahtendes der Spule liegt.

Der erste Spulenabschnitt und/oder der zweite Spulenabschnitt lässt sich auf einfache Weise an dem ersten Steg und/oder zweiten Steg mittels einer Wicklung fixieren. Dazu ist der entsprechende Spulendraht mindestens einmal um den entsprechenden Steg gewickelt. Es müssen dann keine zusätzlichen Fixierungselemente vorgesehen werden. Das entsprechende Spulenmodul lässt sich auf einfache Weise herstellen.

Insbesondere weisen der erste Steg und/oder der zweite Steg mindestens eine Ausnehmung zur Aufnahme einer Wicklung auf. Dadurch lassen sich der erste Spulenabschnitt und der zweite Spulenabschnitt auf einfache Weise an der gewünschten Position am Spulenmodul herstellen.

Günstig ist es, wenn der erste Steg und der zweite Steg im Wesentlichen parallel zueinander liegen. Dadurch lässt sich eine elektrische Kontaktierung mit der entsprechenden Kontaktstelle über einen relativ großen Flächenbereich herstellen, wobei sich, insbesondere wenn eine Mehrzahl von Spulenmodulen vorgesehen sind, die Spulenmodule platzsparend an dem Stator anordnen lassen.

Günstig ist es, wenn der erste Spulenabschnitt und der zweite Spulenabschnitt quer zu dem ersten Steg und dem zweiten Steg liegen. Dadurch wird ein Freiraum bereitgestellt, über welchen der erste Spulenabschnitt und der zweite Spulenabschnitt mit entsprechenden Kontaktstellen elektrisch kontaktierbar sind. Über diesen Freiraum kann beispielsweise ein Roboter für die Anschweißung oder Anlötung sorgen.

Aus dem gleichen Grund ist es günstig, wenn der erste Spulenabschnitt und der zweite Spulenabschnitt quer zu einer Spulenachse liegen. Dadurch lassen sich Spulenabschnitte bereitstellen, welche sich flach auf entsprechende Kontaktstellen auflegen lassen, um auf einfache und schnelle Weise für eine elektrische Kontaktierung zu sorgen.

Günstigerweise sind der erste Steg und der zweite Steg quer zu einer Spulenachse orientiert, um zwischen den beiden Stegen Spulenabschnitte spannen zu können.

Bei einer Ausführungsform weisen der erste Steg und der zweite Steg eine unterschiedliche Länge auf. Dadurch lassen sich mehrere Spulenmodule um eine Achse verteilt anordnen.

Beispielsweise liegen der erste Spulenabschnitt und der zweite Spulenabschnitt in einem Winkel zueinander, wobei vorzugsweise der äußere Spulenabschnitt in einem Winkel zu dem ersten Steg und dem zweiten Steg liegt.. Dadurch ergibt sich eine platzsparende Anordnung, wobei eine große Kontaktfläche zur Kontaktierung mit einer Kontaktstelle bereitgestellt wird.

Ganz besonders vorteilhaft ist es, wenn der erste Spulenabschnitt und der zweite Spulenabschnitt von oben her mit Kontaktstellen elektrisch kontaktierbar sind. Dadurch ist eine automatische Kontaktierung insbesondere mit einem Roboter möglich. Der entsprechende Stator lässt sich auf einfache Weise mit hohem Automatisierungsgrad herstellen.

Günstig ist es, wenn der Spulenhalter so ausgebildet ist, dass er auf eine Spulenhalteraufnahme des Stators aufsetzbar ist. Dadurch lässt sich ein Spulenmodul auf einfache Weise beispielsweise an einem Rückschlusskörper des Stators fixieren.

Günstig ist es, wenn der Spulenhalter,eine Ausnehmung aufweist, in welche ein Haltestift (des Stators) eintauchbar ist. Das Spulenmodul lässt sich dadurch auf den Haltestift aufsetzen, um auf einfache Weise für eine Fixierung beispielsweise an einem Rückschlusskörper des Stators zu sorgen.

Bei einem Ausführungsbeispiel weist der Spulenhalter ein Basiselement und ein Deckelelement auf, welche die Spule überdecken. Dadurch lässt sich auf einfache Weise eine Wicklung an dem Spulenmodul herstellen.

Günstig ist es, wenn der erste Steg und der zweite Steg an dem Basiselement angeordnet sind. Dadurch können der erste Steg und der zweite Steg beispielsweise in einer Ausnehmung einer Haltebasis eines Rückschlusskörpers positioniert werden.

Bei einem Ausführungsbeispiel ist an dem Basiselement ein Flansch angeordnet, welcher eine Erstreckungsrichtung parallel zu einer Spulenachse aufweist und an welchem der erste Steg und der zweite Steg sitzen.

Über den Flansch lässt sich ein Abstand zwischen den Stegen und einer Unterseite der Spule herstellen. Dadurch ist es möglich, die Stege in einer Ausnehmung beispielsweise einer Haltebasis eines Rückschlusskörpers des Stators anzuordnen. Dadurch wiederum wird auf einfache Weise eine Kontaktierung beispielsweise mit einer Kontaktplatine ermöglicht.

Bei einem Ausführungsbeispiel ist eine Drehsicherungseinrichtung zur Drehfixierung an dem Stator vorgesehen. Dadurch lässt sich eine drehfeste Anordnung eines Spulenmoduls an dem Stator erreichen und dabei auch eine automatisch richtige Ausrichtung des Spulenmoduls an dem Stator erreichen.

Bei einer fertigungstechnisch einfachen Ausführungsform ist die Drehsicherungseinrichtung mittels mindestens einem Stift und/oder einer Stiftaufnahme gebildet. Der Stift kann in eine Stiftaufnahme beispielsweise an einer Kontaktplatine eintauchen bzw. ein Stift der Kontaktplatine kann in die Stiftaufnahme eintauchen, um für eine Drehsicherung zu sorgen.

Bei einer vorteilhaften Ausführungsform sitzen der erste Steg und der zweite Steg einstückig an dem Spulenhalter. Insbesondere ist das Spulenmodul außerhalb der Spule einstückig hergestellt.

Beispielsweise ist der Spulenhalter bzw. das Spulenmodul ohne Spule aus einem Kunststoffmaterial. Ein solcher Spulenhalter lässt sich beispielsweise durch Spritzgießen herstellen.

Günstig ist es, wenn der Spulenhalter einen Wickelkern aufweist, welcher zylindrisch ausgebildet ist. In dem Wickelkern kann eine durchgehende Ausnehmung gebildet sein, um das Spulenmodul auf einen Haltestift aufsetzen zu können. Durch eine zylindrische Ausbildung des Wickelkerns lässt sich eine Spule auf einfache Weise an einer Wickelmaschine herstellen.

Der Erfindung liegt ferner die Aufgabe zugrunde, einen Stator für einen Elektromotor bereitzustellen, welcher auf einfache Weise herstellbar ist.

Diese Aufgabe wird erfindungsgemäß dadurch gelöst, dass ein Rückschlusskörper vorgesehen ist, an dem mindestens ein erfindungsgemäßes Spulenmodul angeordnet ist.

Der erfindungsgemäße Stator weist die bereits im Zusammenhang mit dem erfindungsgemäßen Spulenmodul erläuterten Vorteile auf.

Insbesondere sind der erste Spulenabschnitt und der zweite Spulenabschnitt mit jeweiligen Kontaktstellen elektrisch verbunden und insbesondere durch Schweißen oder Löten verbunden. Dadurch lässt sich die Kontaktierung auf einfache Weise und insbesondere automatisiert herstellen.

Günstig ist es, wenn die Kontaktstellen an einer Platine angeordnet sind. Die Platine ist ein von dem Rückschlusskörper getrenntes Bauteil, wobei über die Kontaktstellen auf einfache Weise ein elektrischer Kontakt mit der Motorschaltung bereitstellbar ist.

Bei einer Ausführungsform ist die Platine unterhalb des Rückschlusskörpers angeordnet. Der elektrische Kontakt wird dann über eine Ausnehmung des Rückschlusskörpers hergestellt.

Günstig ist es, wenn die Platine dem mindestens einen Spulenmodul zugeordnet mindestens eine Stiftaufnahme und/oder mindestens einen Stift zur Bildung einer Drehsicherungseinrichtung aufweist, wobei mindestens ein Stift des Spulenmoduls in die mindestens eine Stiftaufnahme eingetaucht ist und/oder der mindestens eine Stift der Platine in mindestens eine Stiftaufnahme des Spulenmoduls eingetaucht ist. Dadurch lässt sich auf einfache Weise ein Spulenmodul drehfest an dem Rückschlusskörper fixieren, wobei sich auch auf einfache Weise das Spulenmodul richtig ausrichten lässt.

Ganz besonders vorteilhaft ist es, wenn der Rückschlusskörper mindestens einen Haltestift aufweist, an welchem das mindestens eine Spulenmodul angeordnet ist. Das Spulenmodul lässt sich auf den Haltestift aufsetzen und dadurch an dem Rückschlusskörper positionieren.

Bei einer Ausführungsform weist der Rückschlusskörper eine Mehrzahl von Haltestiften auf, welche um eine Achse verteilt angeordnet sind. Entsprechend der Anzahl von Haltestiften weist der Stator Spulen auf.

Günstig ist es, wenn der Haltestift einen ersten Bereich aufweist, an welchem das zugeordnete Spulenmodul sitzt, und einen zweiten Bereich aufweist, welcher oberhalb des Spulemoduls liegt. Dadurch lässt sich ein Elektromotor mit geringen Querabmessungen herstellen.

Insbesondere ist eine Mehrzahl von Haltestiften vorgesehen, deren zweite Bereiche als gemeinsame Flächeneinhüllende einen Kugeloberflächenabschnitt aufweisen. Dadurch lässt sich auf einfache Weise ein Stator herstellen, welcher mindestens segmentweise einem Rotor des Elektromotors zugewandt sphärisch ausgebildet ist. Beispielsweise lassen sich an den zweiten Bereichen Polschuhe positionieren, welche Rückschlusselemente sind und eine sphärische Oberfläche aufweisen.

Günstig ist es, wenn der Rückschlusskörper eine Haltebasis aufweist, an welcher der mindestens eine Haltestift angeordnet ist. Ein solcher Rückschlusskörper lässt sich auf einfache Weise herstellen. Spulenmodule lassen sich auf einfache Weise an einem solchen Rückschlusskörper positionieren.

Insbesondere sind die Haltebasis und der mindestens eine Haltestift einstückig miteinander verbunden. Dadurch lassen sich die Herstellungsschritte minimieren.

Ganz besonders vorteilhaft ist es, wenn der Rückschlusskörper aus einem gepressten Pulvermaterial hergestellt ist. Ein solches Pulvermaterial umfasst insbesondere Eisenkörner, welche gegeneinander elektrisch isoliert sind. Der entsprechende Rückschlusskörper weist nur geringe Wirbelstromverluste auf mit optimierten magnetischen Eigenschaften; insbesondere liegt eine große magnetische Leitfähigkeit bei geringer elektrischer Leitfähigkeit vor. Der Rückschlusskörper lässt sich ferner in einer optimierten geometrischen Gestalt ausbilden.

Günstig ist es, wenn die Haltebasis eine Ausnehmung aufweist, in welcher der erste Steg und der zweite Steg des mindestens einen Spulenmoduls liegen. Es lässt sich dadurch auf einfache Weise die Spule des mindestens einen Spulenmoduls mit Kontaktstellen verbinden. Die Kontaktstellen sind dabei in oder unterhalb der Ausnehmung angeordnet.

Beispielsweise ist die Haltebasis als Ring ausgebildet. Die Stege des mindestens einen Spulenmoduls sind in der Ausnehmung positioniert.

Der Erfindung liegt ferner die Aufgabe zugrunde, einen Elektromotor bereitzustellen, welcher einen Rotor und einen Stator umfasst, und welcher auf einfache Weise herstellbar ist.

Diese Aufgabe wird erfindungsgemäß dadurch gelöst, dass der Stator eine Mehrzahl von Spulenmodulen aufweist.

Die Vorteile des erfindungsgemäßen Elektromotors wurden bereits im Zusammenhang mit dem erfindungsgemäßen Stator und dem erfindungsgemäßen Spulenmodul erläutert.

Insbesondere ist der Rotor über einen oder mehrere Permanentmagnete magnetfelderzeugend. Dadurch lässt sich bei kompakter Bauweise ein hoher Wirkungsgrad erreichen.

Günstig ist es, wenn der Rotor oberhalb der Spulen positioniert ist. Dadurch lässt sich bei Optimierung des Magnetflusses eine kompakte Bauweise insbesondere bezüglich Querabmessungen erreichen.

Bei einer Ausführungsform ist es vorgesehen, dass der Rotor sphärisch gelagert ist. Dadurch ist eine Lagerung mit geringem Verschleiß und geringer Geräuschentwicklung bereitgestellt.

Günstig ist es, wenn der Stator dem Rotor zugewandt mindestens segmentweise sphärisch ausgebildet ist. Insbesondere sind dazu an dem Rückschlusskörper ein oder mehrere Polschuhe angeordnet. Die Polschuhe können einstückig an dem Rückschlusskörper angeordnet sein oder es kann sich um getrennte Elemente handeln.

Beispielsweise sind ein oder mehrere Polschuhe an einem Aufsatz auf dem Stator angeordnet. Über den Aufsatz lässt sich der Stator auf einfache Weise herstellen. Die Polschuhe lassen sich an dem Aufsatz positionieren und fixieren.

Günstig ist es, wenn der Rotor einem sphärischen Bereich des Stators zugewandt sphärisch ausgebildet ist. Dadurch lässt sich ein Elektromotor bereitstellen, welcher einen optimierten Wirkungsgrad aufweist.

Der Elektromotor ist insbesondere elektronisch kommutiert und umfasst einen magnetfelderzeugenden Rotor und einen Positionsgeber mit mindestens einem Sensor. Über den Positionsgeber ist der Rotor positionierbar. Dazu muss zunächst über mindestens einen Sensor die Rotorposition erfasst werden.

Günstig ist es, wenn dem mindestens einen Sensor eine Flussleiteinrichtung zugeordnet ist, über welche ein Rotorsignal zu dem mindestens einen Sensor übertragbar ist. Durch das Vorsehen eines Flussleiteinrichtung lässt sich der Sensor grundsätzlich an einer beliebigen Position anordnen. Die Flussleiteinrichtung sorgt dafür, dass eine genügend hohe Signalhöhe bereitgestellt ist. Dadurch lässt sich der Sensor insbesondere an einer für die Herstellung des Elektromotors optimierten Position positionieren. Beispielsweise wird der Sensor an einer Hauptplatine einer Motorschaltung positioniert oder an einer Zusatzplatine in der Nähe der Hauptplatine. Dadurch kann der Sensor auch auf einfache Weise mit elektrischer Energie versorgt werden und die Signalabführung lässt sich auf einfache Weise realisieren.

Günstig ist es, wenn die Flussleiteinrichtung in Signalwirkverbindung mit dem mindestens einen Sensor und dem Rotor steht. Dadurch wird dem Sensor ein genügend starkes Rotorsignal bereitgestellt, auch wenn der Sensor entfernt vom Rotor angeordnet ist.

Insbesondere ist die Flussleiteinrichtung aus einem paramagnetischen Material wie beispielsweise Weicheisen hergestellt. Dadurch lässt sich der Magnetfluss übertragen.

Bei einer fertigungstechnisch vorteilhaften Ausführungsform ist die Flussleiteinrichtung als Plättchen ausgebildet. Eine solche Flussleiteinrichtung lässt sich auf einfache Weise positionieren. Beispielsweise wird die Flussleiteinrichtung in einer Ausnehmung positioniert, um diese zu fixieren.

Bei einer Ausführungsform weist die Flussleiteinrichtung eine erste Seite und eine gegenüberliegende zweite Seite auf, zwischen welchen sich die Flussleitung erstreckt, wobei die Dicke der Flussleiteinrichtung zwischen der ersten Seite und der zweiten Seite kleiner ist als eine Breite und Länge der Flussleiteinrichtung. Entsprechend lässt sich die Flussleiteinrichtung als dünnes Plättchen herstellen, welches sich auf einfache Weise positionieren lässt.

Günstig ist es, wenn die erste Seite und/oder die zweite Seite im Wesentlichen eben sind und parallel zueinander sind. Eine entsprechende Flussleiteinrichtung lässt sich mit geringen Dickenabmessungen herstellen und auf einfache Weise positionieren.

Günstig ist es, wenn die Flussleiteinrichtung einen Signalaufnahmekopfbereich und einen Leitbereich aufweist. Der Signalaufnahmekopfbereich dient dazu, das Rotorsignal aufzunehmen, das heißt magnetischen Fluss aufzunehmen. Der Leitbereich dient dazu, das aufgenommene Signal dem Sensor zuzuleiten.

Günstigerweise ist der Signalaufnahmekopfbereich gegenüber dem Leitbereich verbreitert, um für eine optimierte Signaleinkopplung zu sorgen.

Ganz besonders vorteilhaft ist es, wenn der Signalaufnahmekopfbereich in seiner Form an eine Trennfläche zwischen dem Rotor und dem Stator angepasst ist. Dadurch lässt sich eine optimierte Signaleinkopplung erhalten, wobei die Flussleiteinrichtung auf einfache Weise positionierbar ist.

Günstig ist es, wenn der mindestens eine Sensor entfernt zu einer Trennfläche zwischen dem Stator und dem Rotor angeordnet ist. Er lässt sich dann an einer geeigneten Stelle positionieren, wobei diese Stelle so gewählt wird, dass die Herstellung vereinfacht ist und beispielsweise Zuleitungen und Ableitungen von dem Sensor mit geringem Aufwand herstellbar sind.

Günstig ist es, wenn der mindestens eine Sensor unterhalb der Trennfläche zwischen dem Stator und dem Rotor angeordnet ist. Dadurch ist die Herstellung des Elektromotors vereinfacht.

Insbesondere ist der mindestens eine Sensor in einem Bereich unterhalb oder oberhalb des Rotors angeordnet. Dadurch ist die Herstellung vereinfacht, da der Sensor nicht mehr unmittelbar am Rotor angeordnet sein muss.

Bei einer Ausführungsform ist der mindestens eine Sensor an einem Träger angeordnet, an welchem Hauptkomponenten einer Motorschaltung angeordnet sind. Dadurch kann dem Sensor auf einfache Weise elektrische Energie bereitgestellt werden und Sensorsignale lassen sich auf einfache Weise ableiten und beispielsweise einer Auswerteschaltung des Positionsgebers zuführen. Der Sensor lässt sich mit der Herstellung des Trägers integral beispielsweise durch Bestückung positionieren.

Es ist dann günstig, wenn der Träger in einer zweiten Kammer eines Gehäuses angeordnet ist, welche getrennt von einer ersten Kammer des Gehäuses ist, in welcher der Stator und der Rotor.angeordnet sind.

Bei einer alternativen Ausführungsform ist der mindestens eine Sensor an einem Zusatzträger angeordnet, welcher getrennt von einem Träger ist, an welchem Hauptkomponenten einer Motorschaltung angeordnet sind. Dieser Zusatzträger wird an einer für die Herstellung optimierten Stelle positioniert.

Günstig ist es, wenn dem Stator eine dem Rotor zugewandte Trennfläche zugeordnet ist, welche sphärisch ausgebildet ist. Der entsprechende Elektromotor lässt sich mit hohem Wirkungsgrad betreiben.

Es ist dann günstig, wenn die dem mindestens einen Sensor zugeordnete Flussleiteinrichtung eine sphärische oder zylindrische Stirnseite aufweist, welche dem Rotor zugewandt ist. Dadurch lässt sich die Flussleiteinrichtung auf optimierte Weise positionieren. Bei einer sphärischen Ausbildung des Stators, mindestens segmentweise dem Rotor zugewandt, lässt sich die Stirnseite zylindrisch ausbilden, wenn die Flussleiteinrichtung entsprechend dünn ist.

Bei einem Ausführungsbeispiel ist dem Stator mindestens ein Polschuh zugeordnet, welche dem Rotor zugewandt ist. Der Polschuh dient zur Bereitstellung einer Rückschlusseinrichtung.

Es ist dann günstig, wenn eine Mehrzahl von Polschuhen an einem Aufsatz angeordnet sind, welcher an dem Stator sitzt. Über den Aufsatz lassen sich die Polschuhe auf einfache Weise positionieren.

Es ist dann günstig, wenn der Aufsatz beabstandete Zwischenstege aufweist, an welchem die Polschuhe angeordnet sind. Über die Zwischenstege lassen sich die Polschuhe positionieren und fixieren und auf Abstand halten.

Die Flussleiteinrichtung lässt sich auf einfache Weise mindestens teilweise an einem Zwischensteg anordnen. Beispielsweise weist ein Zwischensteg eine Ausnehmung beispielsweise in Schlitzform auf, in welcher mindestens teilweise die Flussleiteinrichtung sitzt.

Der erfindungsgemäße Elektromotor wird insbesondere in einer Umwälzpumpe eingesetzt.

Bei einer Ausführungsform umfasst die Umwälzpumpe einen Elektromotor mit einem Stator, einem Rotor und einer Motorschaltung, und ein Gehäuse, in welchem der Elektromotor angeordnet ist. Das Gehäuse weist eine erste Kammer auf, in welcher der Stator und der Rotor angeordnet sind, und weist eine von der ersten Kammer getrennte zweite Kammer auf, an welcher mindestens ein Träger positioniert ist, an welchem mindestens ein Teil der Motorschaltung angeordnet ist. Die erste Kammer und die zweite Kammer sind über mindestens eine Verbindungsöffnung verbunden, über welche mindestens ein elektrisches Element der Motorschaltung, welches an dem mindestens einen Träger angeordnet ist, in thermischem Kontakt mit dem Stator in der ersten Kammer steht.

Der Stator lässt sich über Förderflüssigkeit der Umwälzpumpe (wie beispielsweise Wasser) kühlen. Beispielsweise weist die Förderflüssigkeit eine Höchsttemperatur auf, welche im Bereich zwischen 95°C und 110°C liegt. Der Stator kann Temperaturen entwickeln, welche im Bereich bei ca. 130°C liegen. Es lässt sich dadurch eine effektive Kühlung erreichen.

Wenn ein oder mehrere elektrische Elemente der Motorschaltung über die Verbindungsöffnung in thermischem Kontakt mit dem Stator stehen, dann lassen sich diese über die Förderflüssigkeit kühlen, das heißt es ist eine Mediumkühlung bereitgestellt. Dadurch lässt sich effektiv Wärme abführen. Beispielsweise werden elektronische Leistungsbauelemente der Motorschaltung entsprechend gekühlt.

Mittels der erfindungsgemäßen Lösung ist es möglich, in der zweiten Kammer (welchen einen "Schaltschrank" für den Elektromotor bildet) einen Träger zu positionieren, an dem sowohl Niedertemperaturschaltungselemente als auch Hochtemperaturschaltungselemente positionierbar sind. Die Niedertemperaturschaltungselemente weisen eine geringere Wärmeentwicklung als die Hochtemperaturschaltungselemente auf. Die Niedertemperaturschaltungselemente lassen sich über Luftkühlung kühlen. Die Hochtemperaturschaltungselemente lassen sich über die Förderflüssigkeit aufgrund der thermischen Verbindung mit dem Stator kühlen.

Insbesondere ist der Stator in der ersten Kammer über Förderflüssigkeit kühlbar. Damit ist dann auch das mindestens eine elektrische Element der Motorschaltung, welches über die Verbindungsöffnung mit dem Stator in thermischen Kontakt steht, über Förderflüssigkeit kühlbar.

Es ist ferner vorgesehen, dass die zweite Kammer luftkühlbar ist.

Günstig ist es, wenn der mindestens eine Träger einen Niedertemperaturbereich und einen Hochtemperaturbereich aufweist, wobei der Niedertemperaturbereich luftgekühlt ist und der Hochtemperaturbereich über Förderflüssigkeit gekühlt ist. Dadurch lassen sich an demselben Träger sowohl Niedertemperaturschaltungselemente anordnen, für die eine Luftkühlung ausreicht, als auch Hochtemperaturschaltungselemente, die über Förderflüssigkeit gekühlt sind. Die entsprechende Umwälzpumpe lässt sich auf einfache und kostengünstige Weise herstellen. Insbesondere lassen sich kostengünstige Niedertemperaturschaltungselemente einsetzen.

Ganz besonders vorteilhaft ist es, wenn elektrische Elemente des Niedertemperaturbereichs an einer Seite des mindestens einen Trägers angeordnet sind, welche der ersten Kammer abgewandt sind. Dadurch ist für eine effektive thermische Entkopplung gesorgt, wobei der Träger zwischen der ersten Kammer und den elektrischen Elementen liegt.

Es ist dann auch günstig, wenn elektrische Elemente des Hochtemperaturbereichs an einer Seite des mindestens einen Trägers angeordnet sind, welche der ersten Kammer zugewandt ist. Dadurch lässt sich auf einfache Weise ein thermischer Kontakt mit dem Stator, welcher in der ersten Kammer sitzt, erreichen.

Ganz besonders vorteilhaft ist es, wenn zwischen der ersten Kammer und der zweiten Kammer ein Zwischenraum zur Bildung eines Luftspalts liegt. Über diesen Zwischenraum ist eine Luftspalttrennung zwischen der ersten Kammer und der zweiten Kammer bereitgestellt. Dadurch lassen sich die erste Kammer und die zweite Kammer thermisch entkoppeln.

Günstig ist es, wenn der Zwischenraum zum Außenraum hin offen ist. Dadurch kann Luft durch den Zwischenraum strömen, um für eine Luftkühlung zu sorgen. Ferner wird durch die Luft im Zwischenraum für eine thermische Entkopplung zwischen der ersten Kammer und der zweiten Kammer gesorgt.

Günstigerweise ist die mindestens eine Verbindungsöffnung gegenüber dem Zwischenraum geschlossen, so dass sie gegenüber dem Außenraum geschlossen ist.

Günstig ist es, wenn der Zwischenraum einen Luftspalt umfasst. Über den Luftspalt sind die erste Kammer und die zweite Kammer thermisch entkoppelt. Dadurch ist es beispielsweise möglich, elektrische Elemente, welche an dem Träger in der ersten Kammer angeordnet sind, über Luftkühlung zu kühlen, wenn sie nur eine geringe Wärmeentwicklung aufweisen.

Ganz besonders vorteilhaft ist es, wenn ein Niedertemperaturbereich des mindestens einen Trägers (direkt) unterhalb des Luftspalts liegt. Dadurch ist für eine effektive thermische Entkopplung zwischen elektrischen Elementen des Niedertemperaturbereichs und der ersten Kammer gesorgt.

Bei einer Ausführungsform liegt die zweite Kammer unterhalb der ersten Kammer. Dadurch lässt sich auf einfache Weise eine thermische Kontaktierung zwischen dem mindestens einen Element der Rotorschaltung und dem Stator erreichen.

Günstig ist es, wenn die erste Kammer zur zweiten Kammer hin eine Stirnwand aufweist. Diese Stirnwand schließt die erste Kammer ab.

Aus dem gleichen Grund ist es günstig, wenn die zweite Kammer zur ersten Kammer hin eine Stirnwand aufweist, welche beabstandet zur Stirnwand der ersten Kammer ist. Über die beabstandeten Stirnwände lässt sich ein Zwischenraum zwischen den beiden Kammern herstellen, welcher zur Luftspalttrennung dient.

Bei einer Ausführungsform weist die Stirnwand der ersten Kammer an einer Innenseite eine Ausnehmung zur Aufnahme einer Kontaktplatine des Stators auf. Die Innenseite der Stirnwand der ersten Kammer dient insbesondere zur Positionierung des Stators in der ersten Kammer. In der Ausnehmung lässt sich eine Kontaktplatine positionieren, über welche Spulen des Stators elektrisch mit der Motorschaltung verbunden sind.

Ganz besonders vorteilhaft ist es, wenn das Gehäuse einstückig ausgebildet ist. Es ist insbesondere aus Kunststoff beispielsweise über Spritzgießen hergestellt. Dadurch sind die Zusammenbauschritte bei der Herstellung der Umwälzpumpe gering gehalten.

Günstig ist es, wenn in der ersten Kammer Positionierelemente für den Stator angeordnet sind. Über die Positionierelemente lässt sich bei der Herstellung der Umwälzpumpe der Stator in der ersten Kammer positionieren und insbesondere zentrieren. Dadurch ist die Herstellung vereinfacht.

Der Erfindung liegt ferner die Aufgabe zugrunde, ein Verfahren zur Herstellung eines Stators für einen Elektromotor bereitzustellen, welches auf einfache Weise durchführbar ist.

Diese Aufgabe wird erfindungsgemäß dadurch gelöst, dass ein erfindungsgemäßes Spulenmodul hergestellt wird, das mindestens eine Spulenmodul an einem Rückschlusskörper angeordnet wird und der erste Spulenabschnitt und der zweite Spulenabschnitt an Kontaktstellen einer Platine, welche dem Stator zugeordnet ist, angeschweißt oder angelötet werden.

Die Zuordnung der Platine dem Stator bedeutet, dass diese während der Herstellung relativ zu dem Stator fixiert ist, wobei die Fixierung an dem Stator selber erfolgen kann oder über eine Herstellungsvorrichtung. Es ist dabei grundsätzlich möglich, dass nach der Herstellung des elektrischen Kontakts zwischen der Spule des mindestens einen Spulenmoduls und der Platine die mechanische Fixierung der Platine bezüglich des Stators über die Verschweißung oder Verlötung zur Herstellung des elektrischen Kontakts erfolgt.

Das erfindungsgemäße Verfahren lässt sich mit hohem Automatisierungsgrad durchführen. Insbesondere kann ein Roboter (beispielsweise ein Schweißroboter) zur Herstellung des elektrischen Kontakts zwischen der Spule des mindestens einen Spulenmoduls und der Platine eingesetzt werden.

Ferner lässt sich die Spulenherstellung automatisieren, indem an dem mindestens einen Spulenmodul die Spule mittels einer Wicklungsmaschine hergestellt wird.

Die nachfolgende Beschreibung bevorzugter Ausführungsformen dient im Zusammenhang mit der Zeichnung der näheren Erläuterung der Erfindung. Es zeigen:
- Figur 1: eine Draufsicht auf ein Ausführungsbeispiel einer erfindung- gemäßen Umwälzpumpe;
- Figur 2: eine Schnittansicht längs der Linie 2-2 gemäß Figur 1;
- Figur 3: eine Schnittansicht längs der Linie 3-3 gemäß Figur 2;
- Figur 4: eine Schnittansicht längs der Linie 4-4 gemäß Figur 3;
- Figur 5: eine perspektivische Teildarstellung eines Ausführungsbeispiels eines erfindungsgemäßen Stators;
- Figur 6: eine Draufsicht auf den (Teil-)Stator gemäß Figur 5 in der Rich- tung A (von oben);
- Figur 7: eine Draufsicht auf den (Teil-)Stator gemäß Figur 5 in der Rich- tung B (von unten);
- Figur 8: eine Schnittansicht durch den (Teil-)Stator gemäß Figur 5;
- Figur 9: eine perspektivische Darstellung eines Ausführungsbeispiels eines erfindungsgemäßen Spulenmoduls; und
- Figur 10: eine Draufsicht auf ein Ausführungsbeispiel eines Aufsatzes.

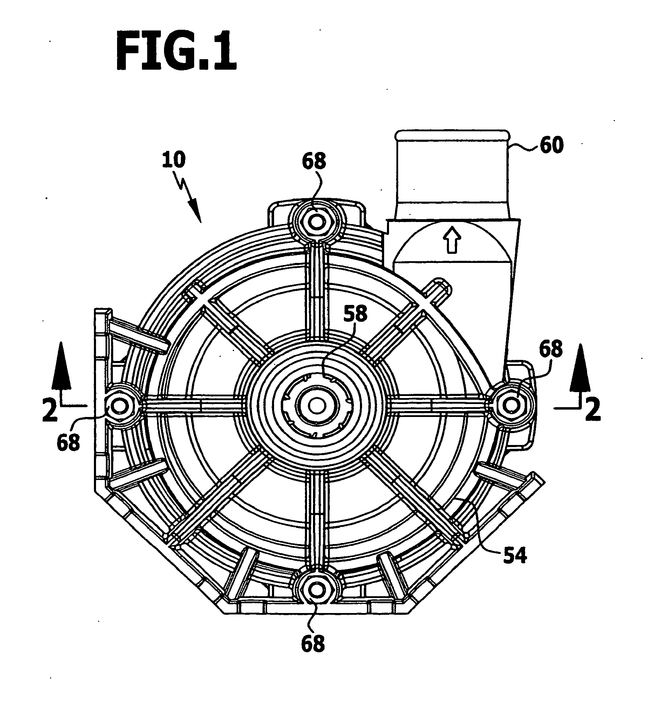

Ein Ausführungsbeispiel einer erfindungsgemäßen Umwälzpumpe, welches in den Figuren 1 bis 3 gezeigt und dort mit 10 bezeichnet ist, umfasst ein Gehäuse 12. In dem Gehäuse 12 ist ein Elektromotor 14 mit einer elektrischen Motorschaltung 16 angeordnet.

Das Gehäuse 12 weist eine erste Kammer 18 und eine von der ersten Kammer 18 getrennte zweite Kammer 20 auf. Die erste Kammer 18 hat einen im Wesentlichen zylindrischen Innenraum 22. Die zweite Kammer 20 hat ebenfalls einen im Wesentlichen zylindrischen Innenraum 24.

In der ersten Kammer 18 ist ein Stator 26 und ein Rotor 28 des Elektromotors 14 angeordnet.

In der zweiten Kammer 20 ist ein Träger 30 angeordnet, bei welchem es sich insbesondere um eine Trägerplatine handelt, an welcher die Motorschaltung 16 oder zumindest Hauptkomponenten der Motorschaltung 16 sitzen. Die zweite Kammer 20 dient als "Schaltschrank" für den Elektromotor 14.

Die zweite Kammer 20 weist zu der ersten Kammer 18 hin eine Stirnwand 32 auf. An der Stirnwand 32 sitzt in den Innenraum 24 weisend ein Stiftelement 34. Dieses Stiftelement 34 ist insbesondere koaxial zu einer Mittelachse 36 des Gehäuses 12 angeordnet. Vorzugsweise weisen die erste Kammer 18 und die zweite Kammer 20 eine Mittelachse auf, welche mit der Mittelachse 36 zusammenfällt. An dem Stiftelement 34 ist der Träger 30 beabstandet zu der Stirnwand 32 fixiert.

Auf dem Träger 30 sind elektrische Schaltungselemente und Verbindungsleitungen beispielsweise in der Form von Leiterbahnen angeordnet. Es handelt sich dabei insbesondere um diskrete Schaltungselemente und integrierte Schaltungselemente. Die Motorschaltung 16 umfasst ein oder mehrere elektronische Leistungsschaltungselemente 38, wie beispielsweise ein oder mehrere Thyristoren, welche an dem Träger 30 angeordnet sind.

Die zweite Kammer 20 ist nach außen hin über ein Deckelelement 40 geschlossen, welches beispielsweise über eine Schraube 42 an dem Stiftelement 34 fixiert ist.

Die erste Kammer 18 weist eine Stirnwand 44 zu der zweiten Kammer 20 hin auf. Diese Stirnwand 44 ist beabstandet zu der Stirnwand 32 der zweiten Kammer 20. Zwischen der Stirnwand 44 und der Stirnwand 32 ist ein Zwischenraum 46 gebildet, welcher zu dem Außenraum offen ist und einen Luftspalt umfasst. Zwischen einer Außenseite der Stirnwand 32 und einer Außenseite der Stirnwand 44 sind dabei Stegelemente 48a, 48b usw. angeordnet, welche die Stirnwand 44 und die Stirnwand 32 unter Bildung des Zwischenraums 46 auf Abstand halten.

Das Gehäuse 12 ist vorzugsweise einstückig ausgebildet. Insbesondere sind die Stirnwände 32 und 44 mit entsprechenden Kammerwänden einstückig ausgebildet.

Die zweite Kammer 20 mit der Motorschaltung 16 ist luftgekühlt. Durch den Zwischenraum 46 ist die zweite Kammer 20 thermisch von der ersten Kammer 18 getrennt, wobei Luft den Zwischenraum 46 durchströmen kann bzw. ein Luftpolster im Zwischenraum 46 liegt.

Der Rotor 28 ist um eine Drehachse 50 rotierbar, welche mit der Mittelachse 36 zusammenfällt. Mit dem Rotor 28 drehfest verbunden ist ein Schaufelrad 52 zur Förderung einer Flüssigkeit.

An dem Gehäuse 12 ist ein oberes Deckelelement 54 angeordnet, welches eine Ausnehmung 56 aufweist, in welcher das Schaufelrad 52 rotierbar ist. Das obere Deckelelement 54 umfasst einen ersten Anschlussstutzen 58, welcher beispielsweise koaxial zur Mittelachse 36 ausgerichtet ist. Über diesen ersten Anschlussstutzen 58 ist Förderflüssigkeit in den Innenraum 56 einführbar.

Über den ersten Anschlussstutzen 58 ist eine Saugseite der Umwälzpumpe 10 definiert.

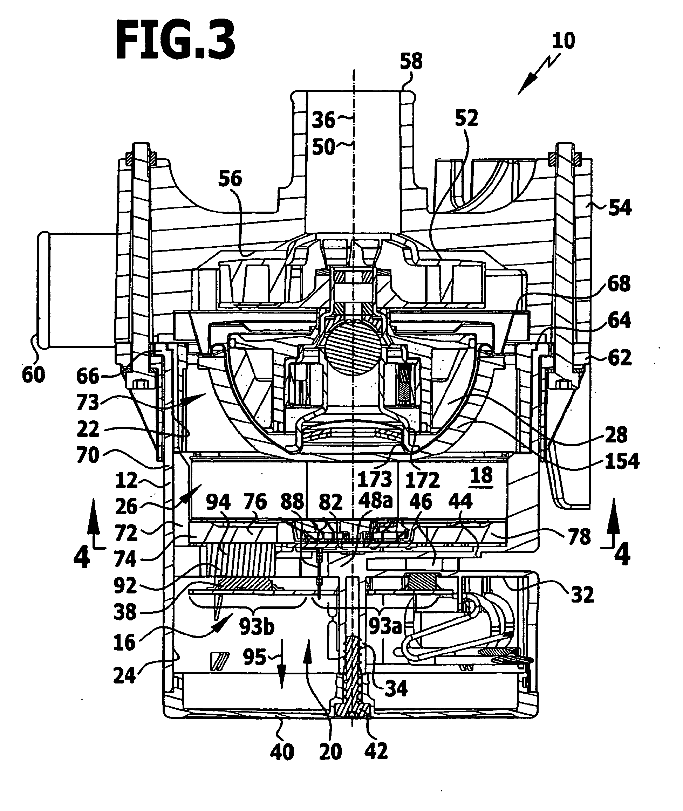

An dem oberen Deckelelement 54 ist ferner ein zweiter Anschlussstutzen 60 angeordnet (Figuren 1 und 3), welcher beispielsweise quer und insbesondere senkrecht zu der Mittelachse 36 orientiert ist. Über diesen zweiten Anschlussstutzen 60 ist geförderte Flüssigkeit abführbar. Der zweite Anschlussstutzen 60 definiert eine Druckseite der Umwälzpumpe 10.

Das obere Deckelelement 54 ist an dem Gehäuse 12 beispielsweise über einen Flansch 62 fixiert. Dazu weist das Gehäuse 12 an seinem oberen Ende 64, welches der zweiten Kammer 20 abgewandt ist, einen nach außen ragenden Ringbereich 66 auf. Der Flansch 62 liegt von unten her an dem Ringbereich 66 an. Über Verspannelemente 68, wie beispielsweise Schrauben oder Bolzen, wird das obere Deckelelement 54 mit dem Flansch 62, welcher insbesondere als Ringflansch ausgebildet ist, verspannt und dadurch an dem Gehäuse 12 gehalten, wobei eine fluiddichte Fixierung mittels eines O-Rings 63 hergestellt ist.

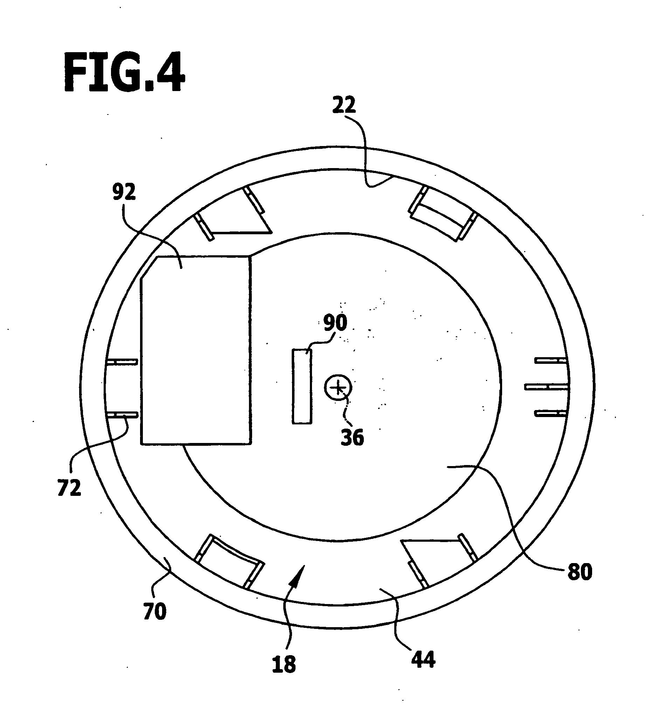

In den Innenraum 22 der ersten Kammer 18 weisend sind an einer Kammerwand 70 Positionierelemente 72 angeordnet (Figuren 3, 4). Diese Positionierelemente 72 sind beispielsweise als Rippen ausgebildet. Beispielsweise sind, wie in Figur 4 gezeigt, eine Mehrzahl von Rippenpaaren um die Mittelachse 36 verteilt an der Kammerwand 70 angeordnet. Diese Positionierelemente 72 dienen zur Positionierung des Stators 26 bei der Herstellung der Umwälzpumpe 10.

Der Stator 26 umfasst eine magnetische Rückschlusseinrichtung 73 mit einem Rückschlusskörper 74 und Polschuhen. Dieser Rückschlusskörper 74 ist insbesondere einstückig ausgebildet. Er ist vorzugsweise aus einem gepressten Pulvermaterial hergestellt, welches beispielsweise Eisenkörner umfasst, die gegeneinander elektrisch isoliert sind. Ein solches Pulvermaterial ist unter der Bezeichnung "SOMALOY" von der Firma Höganäs, Schweden bekannt. Dadurch lassen sich die Wirbelstromverluste in dem Rückschlusskörper 74 gering halten. Die erforderlichen magnetischen Eigenschaften (große Magnetleitfähigkeit) sind bei einer optimierten geometrischen Gestaltbarkeit des Rückschlusskörpers 74 vorhanden.

Der Rückschlusskörper 74 weist eine Haltebasis 76 auf, welche insbesondere als Ring 78 ausgebildet ist. Über diese Haltebasis 76 ist der Stator 26 an einer Innenseite der Stirnwand 44 positioniert.

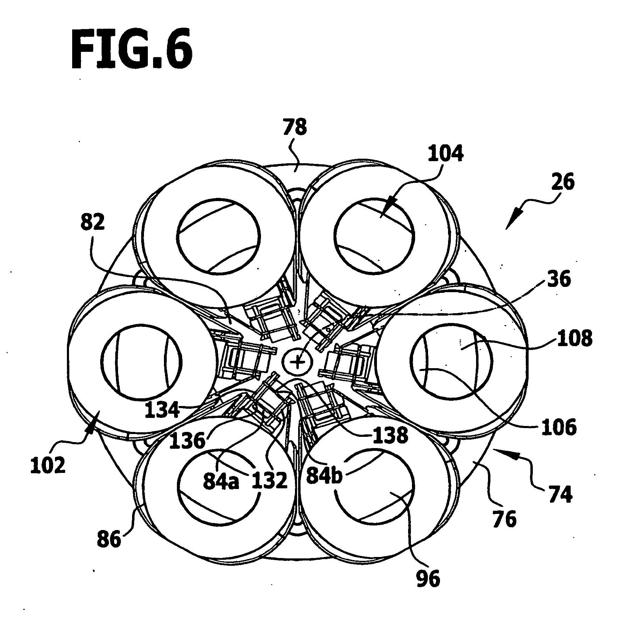

Die Stirnwand 44 weist zu dem Innenraum 22 weisend eine beispielsweise kreisförmige Ausnehmung 80 (Vertiefung) auf (Figur 4). In dieser Ausnehmung 80 ist eine Kontaktplatine 82 angeordnet. Diese Kontaktplatine 82 weist Kontaktstellen 84a, 84b usw. auf (Figur 6), an welchen jeweils eine Spule 86 des Stators 26 elektrisch mit der Kontaktplatine 82 insbesondere über Anschweißung oder Anlötung verbunden ist.

Die Kontaktplatine 82 mit ihren Kontaktstellen 84a, 84b usw. wiederum ist über eine oder mehrere elektrische Verbindungsleitungen 88 (Figur 3) mit der Motorschaltung 16 verbunden. Dazu ist an der Stirnwand 32 und der Stirnwand 44 eine durchgehende Öffnung 90 (Figur 4) angeordnet, über welche die Verbindungsleitung 88 von der ersten Kammer 18 in die zweite Kammer 20 geführt ist. Die Öffnung 90 ist zu dem Zwischenraum 46 hin über eine Außenwand geschlossen.

Zwischen der ersten Kammer 18 und der zweiten Kammer 20 ist ferner eine Verbindungsöffnung 92 vorgesehen (Figur 4). Diese Verbindungsöffnung 92 ist zu dem Zwischenraum 46 hin durch eine Umgebungswand 94 (Figur 3) geschlossen.

An dem Träger 30, welcher wiederum in der zweiten Kammer 20 fixiert ist, sind elektrische Schaltungselemente angeordnet, welche in der zweiten Kammer 20 positioniert sind, und welche luftgekühlt sind. An dem Träger 30 sind ferner elektronische Leistungsschaltungselemente 38 angeordnet, welche mindestens teilweise in der ersten Kammer 18 positioniert sind. Sie ragen durch die Verbindungsöffnung 92 hindurch in die erste Kammer 18 und stehen in thermischem Kontakt mit dem Stator 26 und insbesondere mit dem Rückschlusskörper 74.

Der Stator 26 lässt sich auf effektive Weise über die Förderflüssigkeit, welche durch die Umwälzpumpe 10 gefördert wird, kühlen. Beispielsweise erreicht der Stator 26 eine Temperatur von ca. 130°C. Durch die Umwälzpumpe 10 gefördertes Wasser erreicht maximal eine Temperatur von ca. 95°C bis 110°C. Derjenige Teil der Motorschaltung 16, der viel Wärme erzeugt (insbesondere elektronische Leistungsschaltungselemente 38), steht über die Verbindungsöffnung 92 in thermischem Kontakt mit dem Stator 26, um die Kühlwirkung der Förderflüssigkeit am Stator 26 zu nutzen.

Die erste Kammer 18 und die zweite Kammer 20 sind dabei über den Zwischenraum 26 durch einen Luftspalt getrennt.

Der Träger 30 ist in einen Niedertemperaturbereich 93a und in einen Hochtemperaturbereich 93b aufgeteilt, wobei der Niedertemperaturbereich 93a luftgekühlt ist und Schaltungselemente des Hochtemperaturbereichs 93b über die Förderflüssigkeit gekühlt sind. Schaltungselemente des Hochtemperaturbereiches 93b stehen in thermischem Kontakt mit dem Stator 26 und ragen in Richtung der ersten Kammer 18 von dem Träger 30 weg. Schaltungselemente des Niedertemperaturbereichs 93a ragen von dem Träger 30 weg in die entgegengesetzte Richtung 95, d.h. von der ersten Kammer 18 weg in Richtung des Deckelelements 42, um für eine effektive thermische Entkopplung zu sorgen. Der Niedertemperaturbereich 93a ist direkt unterhalb des Luftspalts des Zwischenraums 46 angeordnet.

Die Kontaktplatine 82 sitzt unterhalb des Rückschlusskörpers 74 in der Ausnehmung 80.

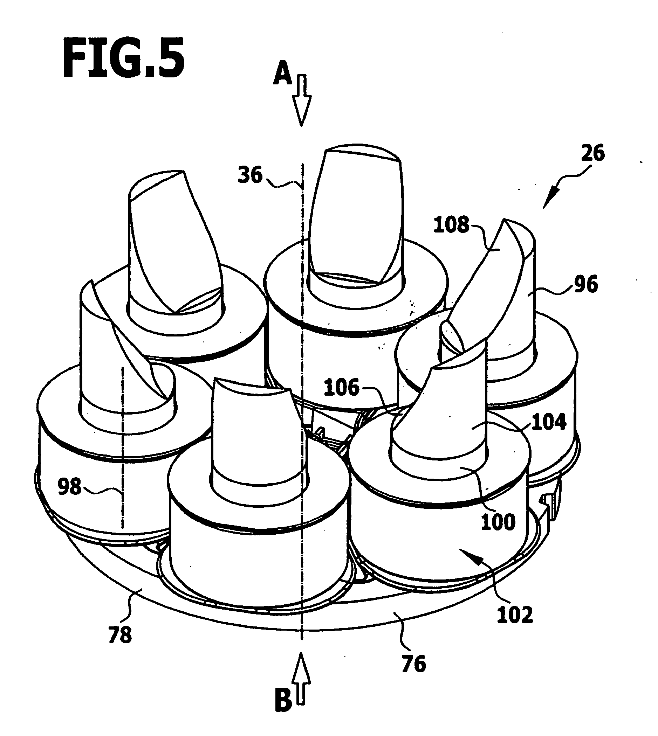

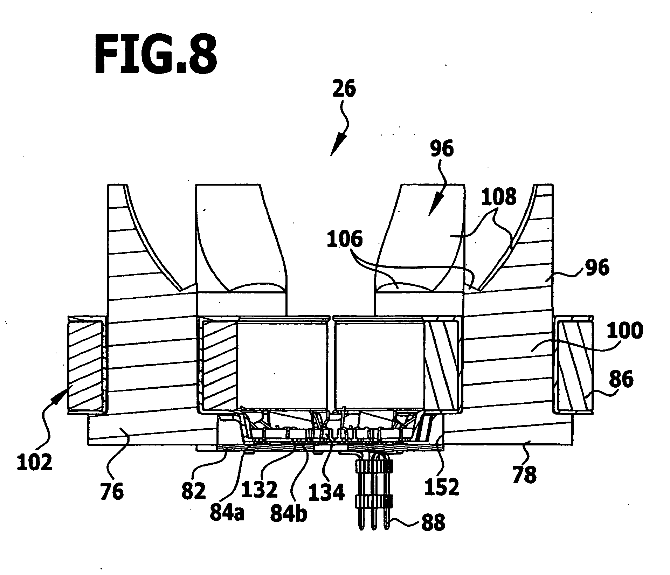

Die Haltebasis 76 ist koaxial zu der Mittelachse 36 ausgerichtet. An der Haltebasis 76 sitzen gleichmäßig verteilt um die Mittelachse 36 eine Mehrzahl von Haltestiften 96 (Figuren 5 bis 8). Die Haltestifte 96 (Haltezähne) weisen alle den gleichen Abstand zu der Mittelachse 36 auf. Ferner weisen benachbarte Haltestifte 96 den gleichen Abstand zueinander auf. Durchstoßpunkte von Achsen 98 der Haltestifte 96 an der Haltebasis 76 definieren ein regelmäßiges Vieleck. Bei dem in Figur 5 gezeigten Ausführungsbeispiel umfasst der Stator 26 sechs Spulen 86. Das regelmäßige Vieleck ist in diesem Beispiel ein Sechseck, wobei der Winkelabstand zwischen benachbarten Haltestiften 96 60° ist. Die Achsen 98 der Haltestifte 96 sind jeweils parallel zur Mittelachse 36 orientiert.

Die Haltestifte 96 sind einstückig mit der Haltebasis 76 verbunden.

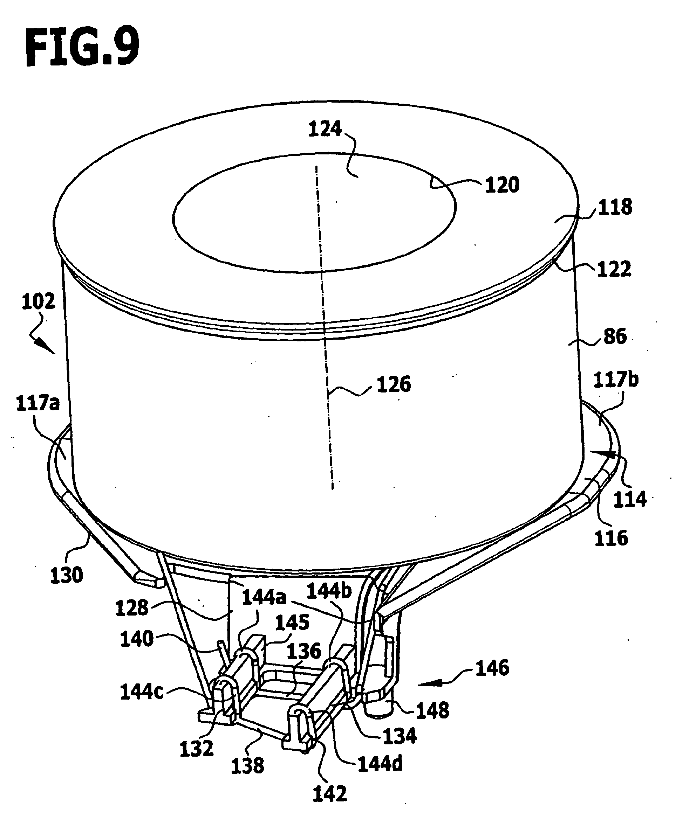

Ein Haltestift 96 weist einen ersten Bereich 100 auf, an welchem ein Spulenmodul 102 (Figur 9) angeordnet ist. Der erste Bereich 100 ist im Wesentlichen zylindrisch ausgebildet. Über diesen ersten Bereich 100 ist ein Haltestift 96 mit der Haltebasis 76 verbunden.

Ferner weist ein Haltestift 96 einen zweiten Bereich 104 auf, welcher oberhalb des ersten Bereichs 100 und oberhalb des jeweiligen Spulenmoduls 102 liegt. Der zweite Bereich 104 weist jeweils einen unteren Flächenbereich 106 auf, welcher im Wesentlichen eben ausgebildet ist und welcher parallel zu der Haltebasis 76 ist. Dieser untere Flächenbereich 106 weist eine Flächennormale auf, welche parallel zur Mitte!achse.36 ist.

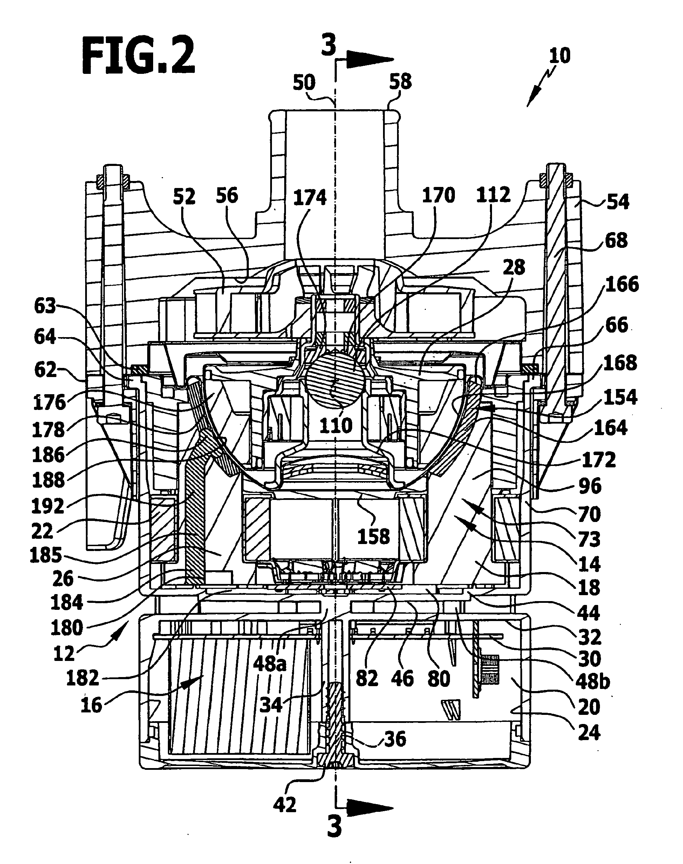

Der zweite Bereich 104 weist ferner einen sphärischen Flächenbereich 108 auf, wobei die Einhüllende der sphärischen Flächenbereiche 108 aller Haltestifte 96 ein Kugeloberflächenabschnitt ist. Ein Mittelpunkt der zu diesem Kugeloberflächenabschnitt gehörenden Kugel liegt auf der Mittelachse 36. Dieser Mittelpunkt, welcher in Figur 2 mit dem Bezugszeichen 110 angedeutet ist, liegt insbesondere im Mittelpunkt eines konvexen Lagerkörpers 112, über welchen der Rotor 28 sphärisch gelagert ist.

An den jeweiligen Haltestiften 96 sitzen Spulenmodule 102, welche grundsätzlich gleich ausgebildet sind.

Ein Spulenmodul 102 umfasst einen Spulenhalter 114. Der Spulenhalter 114 wiederum weist ein Basiselement 116 und ein Deckelelement 118 auf. Zwischen dem Basiselement 116 und dem Deckelelement 118 ist ein insbesondere hohlzylindrischer Wickelkern 120 angeordnet. Auf diesen Wickelkern 120 ist die jeweilige Spule 86 mit einer Mehrzahl von Windungen 122 gewickelt. Das Deckelelement 118 und das Basiselement 116 sind dabei so ausgebildet, dass sie über eine äußere Begrenzungseinhüllende der Spule 86 hinausragen und damit die Spule 86 nach oben und nach unten hin abdecken.

Das Basiselement 116 (und auch das Deckelelement 118) ist so ausgebildet, dass zu benachbarten Spulen und zu geerdeten Teilen über die entsprechende Luftstrecke der notwendige Abstand hergestellt ist. Beispielsweise umfasst das Basiselement hierzu seitliche Ohren 117a, 117b mittels welchen das Basiselement 116 von einer Kreisscheibengestalt abweicht

Beispielsweise ist ein Mindestabstand (Luftstrecke) von 3 mm von Metall zu Metall realisiert.

Der Spulenhalter 114 weist eine insbesondere zylindrische Ausnehmung 124 auf, welche als durchgehende Öffnung ausgebildet ist. Die Ausnehmung 124 bildet eine Stiftaufnahme für einen Haltestift 96, welcher durch die Ausnehmung 124 hindurchtauchen kann. Über die Ausnehmung 124 ist das Spulenmodul 102 auf den zugeordneten Haltestift 96 aufsetzbar, um die Spule 86 an dem Stator 26 zu fixieren.

Der Spulenhalter 114 ist in der Art einer Fadenrolle ausgebildet.

Der Spulenhalter 114 ist insbesondere so ausgebildet, dass die Spule 86 an dem Spulenhalter 114 automatisch über eine Wicklungsmaschine herstellbar ist.

Eine Spulenachse 126 ist quer und insbesondere senkrecht zu dem Basiselement 116 und zu dem Deckelelement 118 orientiert. Bei an dem Rückschlusskörper 74 fixiertem Spulenmodul 102 ist die Spulenachse 126 im Wesentlichen parallel zu der Mittelachse 36 und zu der Achse 98 des entsprechenden Haltestifts 96 orientiert. Sie fällt dabei insbesondere mit der Achse 98 des Haltestifts 96 zusammen.

An dem Basiselement 116 des Spulenhalters 114 ist ein Flansch 128 angeordnet, Welcher sich von dem Basiselement 116 nach unten erstreckt. Der Flansch 128 weist dabei eine Erstreckungsrichtung auf, welche parallel zur Spulenachse 126 ist. (Der Flansch 128 kann dabei selber parallel zur Spulenachse 126 ausgerichtet sein oder beispielsweise schräg zur Spulenachse 126 angeordnet sein.) Der Flansch 128 ragt dadurch über eine untere Begrenzungsebene 130 hinaus, welche durch das Basiselement 116 definiert ist.

An dem Flansch 128 sitzen ein erster Steg 132 und ein zweiter Steg 134. Der erste Steg 132 und der zweite Steg 134 sind beispielsweise parallel zueinander orientiert. Die beiden Stege 132 und 134 sind quer zur Spulenachse 126 orientiert und insbesondere senkrecht zu dieser. Die beiden Stege 132 und 134 ragen über eine Begrenzungsfläche der Spule 86 an dem Spulenmodul 102 hinaus.

Der erste Steg 132 und der zweite Steg 134 sitzen dabei an oder in der Nähe eines unteren Endes des Flansches 128.

Der Spulenhalter 114 mit seinem Basiselement 116 und seinem Deckelelement 118 ist insbesondere einstückig ausgebildet. Ferner ist der Flansch 128 mit dem ersten Steg 132 und dem zweiten Steg 134 einstückig an dem Spulenhalter 114 angeordnet. Der Spulenhalter 114 ist insbesondere aus einem Kunststoffmaterial hergestellt.

Der erste Steg 132 und der zweite Steg 134 dienen dazu, einen ersten Spulenabschnitt 136 und einen zweiten Spulenabschnitt 138 zu halten, wobei diese beiden Spulenabschnitte 136, 138 quer und insbesondere mindestens näherungsweise senkrecht zu der Spulenachse 126 orientiert sind. Ferner sind der erste Spulenabschnitt 136 und der zweite Spulenabschnitt 138 mindestens näherungsweise auf der gleichen Höhe angeordnet. Sie weisen vorzugsweise eine Einhüllendenebene auf, welche parallel zu der Kontaktplatine 82 orientiert ist, wenn das Spulenmodul 102 an dem Rückschlusskörper 174 positioniert ist.

Der erste Spulenabschnitt 136 und der zweite Spulenabschnitt 138 sind quer zu dem ersten Steg 132 und dem zweiten Steg 134 orientiert. Beispielsweise ist der erste Spulenabschnitt 136 im Wesentlichen senkrecht zu dem ersten Steg 132 und dem zweiten Steg 134 orientiert. Der zweite Spulenabschnitt 138 liegt nicht parallel zum ersten Spulenabschnitt 136, sondern in einem Winkel zu diesem und damit auch in einem kleinen spitzen Winkel (beispielsweise in der Größenordnung von 30°) zu dem ersten Steg 132 und dem zweiten Steg 134. Dazu kann es vorgesehen sein, dass der erste Steg 132 kürzer ausgebildet ist als der zweite Steg 134.

Bei dieser Ausbildung lässt sich bei Bereitstellung einer großen Kontaktfläche eine Mehrzahl von Spulenmodulen 102 verteilt um die Mittelachse 36 an dem Rückschlusskörper 74 anordnen (Figur 6).

Der erste Spulenabschnitt 136 liegt in der Nähe eines ersten Drahtendes 140 der Spule 86. Der zweite Spulenabschnitt 138 liegt in der Nähe eines zweiten Drahtendes 142 der Spule 86.

Der Spulendraht ist an dem ersten Steg 132 und dem zweiten Steg 134 jeweils über eine Wicklung 144a, 144b, 144c, 144d fixiert. So ist der Spulendraht im Bereich des ersten Drahtendes 140 über die Wicklung 144a an dem ersten Steg 132 fixiert. Von dieser Wicklung geht der erste Spulenabschnitt 136 aus, welcher sich zwischen dem ersten Steg 132 und dem zweiten Steg 134 erstreckt. Über die Wicklung 144b ist der Spulendraht dann weiter an dem zweiten Steg 134 fixiert. Von dort aus führt der Spulendraht zu dem Spulenhalter 114.

Im Bereich des zweiten Drahtendes 142 ist der Spulendraht über die Wicklung 144d an dem zweiten Steg 134 fixiert. Ausgehend von dieser Wicklung 144d führt der zweite Spulenabschnitt 138, welcher zwischen dem ersten Steg 132 und dem zweiten Steg 134 liegt, zu der Wicklung 144c, über welche der Spulendraht an dem ersten Steg 132 fixiert ist. Von dieser Wicklung 144c läuft der Spulendraht dann zu dem Spulenhalter 114.

Der erste Steg 132 und der zweite Steg 134 weisen jeweils Ausnehmungen 145 zur Aufnahme der entsprechenden Wicklungen 144a, 144b, 144c, 144d auf.

Dem Spulenmodul 102 ist eine Drehsicherungseinrichtung 146 zugeordnet, über welche sich das Spulenmodul 102 drehfest an dem Rückschlusskörper 74 fixieren lässt. Die Drehsicherungseinrichtung 146 umfasst dazu (mindestens) einen Stift 148, welcher an dem Flansch 128 sitzt und im Wesentlichen parallel zur Spulenachse 126 nach unten ragt.

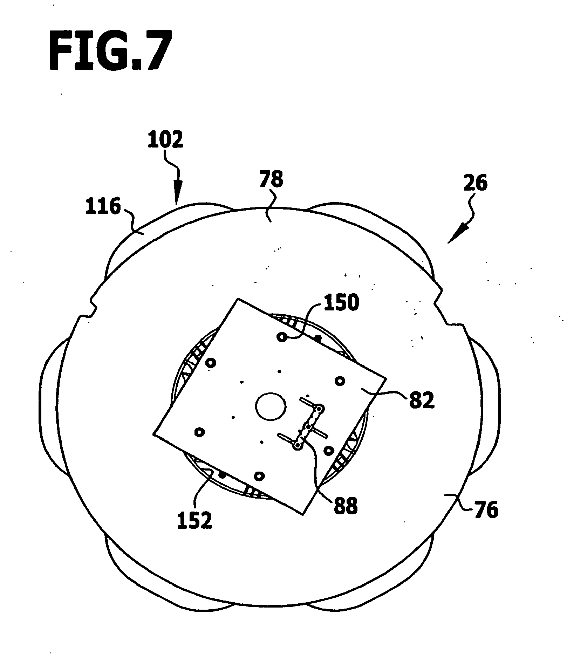

Die Kontaktplatine 82 weist eine dem entsprechenden Spulenmodul 102 zugeordnete Stiftaufnahme 150 auf (Figur 7), in welche der Stift 148 bei korrekter Positionierung des Spulenmoduls 102 an dem zugeordneten Haltestift 96 eingetaucht ist.

Die Haltebasis 76 weist eine Ausnehmung 152 auf. Wenn die Haltebasis 76 als Ring 78 ausgebildet ist, dann ist die Ausnehmung 152 die Ringausnehmung. Der Flansch 128 der jeweiligen Spulenmodule 102 ist in diese Ausnehmung 152 eingetaucht. Der erste Steg 132 und der zweite Steg 134 und damit auch der erste Spulenabschnitt 136 und der zweite Spulenabschnitt 138 des entsprechenden Spulenmoduls 102 sind dadurch in der Ausnehmung 152 positioniert. Nach unten zu der Stirnwand 32 in ist die Ausnehmung 152 durch die Kontaktplatine 82 begrenzt. Die Spulenabschnitte 136 und 138 liegen an den Kontaktstellen 84a, 84b der Kontaktplatine 82 an und sind mit diesen elektrisch verbunden. Die Verbindung ist insbesondere durch Schweißen oder Löten hergestellt.

Über die Verbindungsleitung oder Verbindungsleitungen 88 wiederum ist der elektrische Kontakt zwischen den Kontaktstellen 84a, 84b und der Motorschaltung 16 hergestellt.

Zur Herstellung des Stators 26 wird der Rückschlusskörper 74 insbesondere einstückig aus dem gepressten Pulvermaterial hergestellt.

Getrennt davon werden die Spulenmodule 102 hergestellt. Es werden dabei insbesondere die Spulen 86 an den Spulenhaltern 114 durch Wicklung mittels einer Wicklungsmaschine hergestellt.

Die jeweiligen Spulenmodule 102 werden dann von oben auf die Haltestifte 96 des Rückschlusskörpers 74 aufgesetzt, und zwar derart, dass die Stifte 148 der Spulenmodule 102 in die Stiftaufnahmen 150 der Kontaktplatine 82 (welche zuvor am Rückschlusskörper 74 positioniert wurde) eintauchen können. Dadurch ist eine richtige Ausrichtung der Spulenmodule 102 erreicht.

Die jeweiligen ersten Spulenabschnitte 136 und zweiten Spulenabschnitte 138 sind dabei bei entsprechender Dimensionierung an den jeweiligen Kontaktstellen 84a, 84b positioniert. Die elektrische Verbindung kann dann von oben her durch Schweißen über einen Schweißroboter oder durch Löten erfolgen.

Die Herstellung des Stators 26 lässt sich dadurch mit einem hohen Automatisierungsgrad durchführen.

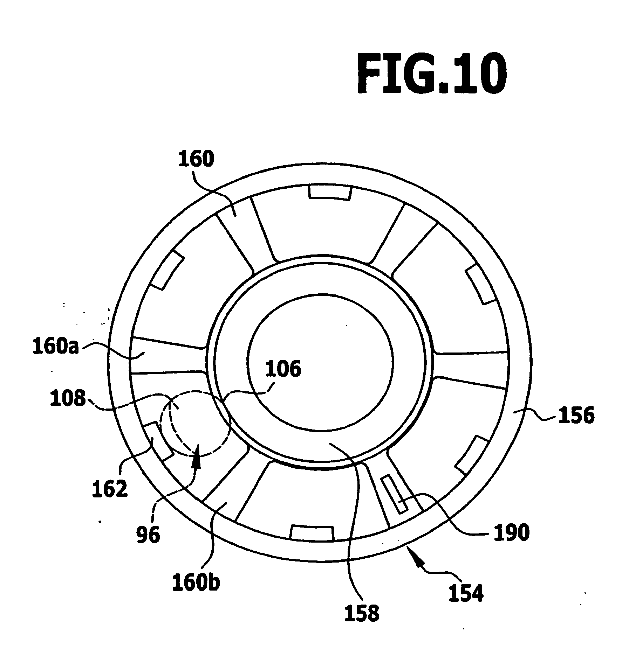

Auf dem Rückschlusskörper 74 mit den Spulenmodulen 102 ist ein Aufsatz 154 aufgesetzt (Figur 10), welcher insbesondere aus einem Kunststoffmaterial hergestellt ist.

Der Aufsatz 154 ist beispielsweise einstückig ausgebildet. Er umfasst ein Ringelement 156, welches auf dem Rückschlusskörper 74 positionierbar ist. Es ist insbesondere auf die Deckelelemente 108 der Spulenmodule 102 aufsetzbar. Das Ringelement 156 ist dann in dem Innenraum 22 der ersten Kammer 18 positioniert.

Innerhalb des Ringelements 156 ist ein Innenelement 158 angeordnet. Das Innenelement ist über entsprechende Anlageflächen an die unteren Flächenbereiche 106 der Haltestifte 96 anlegbar. Durch das Innenelement 158 ist der Zwischenraum zwischen den Spulenmodulen 102 um die Mittelachse 36 abgedeckt.

Das Innenelement 158 ist an dem Ringelement 156 über Zwischenstege 160 gehalten. Die Anzahl der Zwischenstege entspricht dabei der Anzahl der Spulenmodule 102. Bei dem in Figur 10 gezeigten Ausführungsbeispiel sind sechs Zwischenstege 160 entsprechend den sechs vorgesehenen Spulenmodulen 102 vorgesehen. Die Zwischenstege 160 sind gleichmäßig beabstandet zueinander, beispielsweise in einem Winkelabstand von 60°.

Zwischen benachbarten Zwischenstegen 160a, 160b sind an dem Ringelement 156 Positionierelemente 162 angeordnet. Diese Positionierelemente 162 dienen zur Anlage an die zweiten Bereiche 104 der Haltestifte 96 an einer den sphärischen Flächenbereich 108 abgewandten Seite. Über sie lässt sich der Aufsatz 105 an dem Rückschlusskörper 74 zentrieren.

Zwischen benachbarten Zwischenstegen 160a, 160b sind jeweils Polschuhe 164 der magnetischen Rückschlusseinrichtung 73 angeordnet, welche aus magnetisch leitfähigem Material hergestellt sind (Figur 2). Die Anzahl der Haltestifte 96 und die Anzahl der Polschuhe 164 entspricht der Anzahl der Zwischenstege 160. Die Zwischenstege 160 dienen als Anlageelement für die Polschuhe 164 und zur räumlichen Trennung benachbarter Polschuhe 164.

Die Polschuhe 164 sind beispielsweise aus einem gepressten Pulvermaterial hergestellt, welches insbesondere Eisenkörner aufweist, die elektrisch voneinander isoliert sind.

Die Polschuhe 164 haben die Form eines Abschnitts einer Kugelschale, das heißt sie weisen gegenüberliegende sphärische Oberflächen auf. Dadurch weist der Stator 26 dem Rotor 28 zugewandt im Bereich der Polschuhe 164 eine sphärische Oberfläche auf.

Die Polschuhe 164 stehen in mechanischem Kontakt mit den jeweiligen Haltestiften 96, um eine magnetisch leitfähige Verbindung bereitzustellen.

Auf den Polschuhen 164 ist eine Abdeckung 166 (Trennkalotte) angeordnet, welche den Stator 26 fluiddicht von einem Nassraum der Umwälzpumpe 10 trennt. Die Abdeckung definiert eine Trennfläche zwischen dem Stator 26 und dem Rotor 28.

Die Spulenmodule 102 mit den jeweiligen Spulen 86 sind bezogen auf die Mittelachse 86 unterhalb des Rotors 28 und unterhalb des Aufsatzes 154 angeordnet, das heißt eine Einhüllende der Deckelelemente 118 liegt unterhalb des Rotors 28 und unterhalb der Polschuhe 164.

Durch die Abdeckung 166 ist ein Raum 168 in der Umwälzpumpe 10 gebildet, in welchem der Rotor 28 positioniert ist. Dieser Raum 168 hat die Form eines Kugelabschnitts entsprechend einer Halbkugel, welche eine abgeschnittene Polkappe hat.

Der Rotor 28 ist über den Lagerkörper 112 sphärisch gelagert. Der Lagerkörper 112 ist konvex ausgebildet mit einer sphärischen Oberfläche 170. Der Lagerkörper 112 ist an einer Säule 172 drehfest angeordnet. Diese Säule 172 ist auf einer Auswölbung 173 der Abdeckung 166 fixiert und erstreckt sich oberhalb des Innenelements 158 mit koaxialer Ausrichtung zur Mittelachse 36. Der Lagerkörper 112 ist beispielsweise aus einem keramischen Material hergestellt.

Der Rotor 28 umfasst eine konkave Lagerschale 174, welche auf dem Lagerkörper 112 positioniert ist. Durch die Lagerschale 174 und den Lagerkörper 112 ist ein sphärisches Lager bereitgestellt.

Der Rotor 28 ist dem Stator 26 zugewandt sphärisch ausgebildet, wobei ein entsprechender Kugelmittelpunkt mindestens näherungsweise mit dem Mittelpunkt 110 zusammenfällt.

Der Rotor 28 ist magnetfelderzeugend ausgebildet. Dazu weist er ein oder mehrere Permanentmagnete 176 auf.

Zwischen der Abdeckung 166 und dem Rotor 28 ist ein "Luft"-Spalt 178 gebildet, welcher abschnittsweise eine Kugelschalenform hat. Durch diesen Spalt 178 ist Förderflüssigkeit durchströmbar bis zu dem Lagerkörper 112, um für eine Flüssigkeitsschmierung des sphärischen Lagers (gebildet mittels des Lagerkörpers 112 und der Lagerschale 174) zu sorgen.

Der Luftspalt 178 steht dazu in fluidwirksamer Verbindung mit dem Innenraum 56 der Umwälzpumpe 10, in welchem das Schaufelrad 52 rotierbar ist.

Das Schaufelrad 52 ist dabei drehfest mit der Lagerschale 174 verbunden und ist insbesondere oberhalb des Lagerkörpers 112 angeordnet.

Der Elektromotor 14 ist elektronisch kommutiert. Er weist dazu einen Positionsgeber auf, welcher insbesondere auf dem Träger 30 angeordnet ist und Teil der Motorschaltung 16 ist.

Diesem Positionsgeber ist mindestens ein Sensor 180 zugeordnet, welcher zur Ermittlung der Rotorposition dient, um die Spulen 86 des Stator 26 entsprechend ansteuern zu können.

Bei dem Sensor 180 handelt es sich beispielsweise um einen Hall-Sensor.

Der Sensor 180 ist entfernt von dem Rotor 28 angeordnet. Bei dem in Figur 2 gezeigten Ausführungsbeispiel ist er auf einem Zusatzträger 182 angeordnet, welche unterhalb der Spulen 86 sitzt.

Es ist auch möglich, dass der Sensor 180 an dem Träger 30 in der zweiten Kammer 20 angeordnet ist.

Zur Signalwirkankopplung des Sensors 180 und des Rotors 28 ist (mindestens) ein Flussleitelement 184 als Flussleiteinrichtung 185 vorgesehen, über welches ein Rotorsignal von dem Rotor 28 zu dem entfernt angeordneten Sensor 180 übertragen wird; das Flussleitelement 184 sorgt für eine magnetische Flussübertragung von einer Außenseite des Stators 26 her (welche dem Rotor 28 zugewandt ist) zu dem Sensor 180.

Das Flussleitelement 184 ist aus einem paramagnetischen Material und insbesondere Weicheisen hergestellt.

Es weist einen Signalaufnahmebereich 186 auf, welcher mit einer Stirnseite 188 dem Rotor 28 zugewandt ist. Diese Stirnseite 188 ist dabei sphärisch oder zylindrisch ausgebildet. Sie liegt unmittelbar unter der Abdeckung 166.

Insbesondere ist in einem Zwischensteg 160 eine beispielsweise schlitzförmige Ausnehmung 190 gebildet (Figur 10), in welcher der Signalaufnahmebereich 186 angeordnet ist.

Einstückig mit dem Signalaufnahmebereich 186 ist ein Leitbereich 192 verbunden, über welchen sich die Flusssignale von dem Signalaufnahmebereich 186 dem Sensor 180 zuführen lassen.

Der Leitbereich 192 überbrückt den Zwischenraum zwischen dem Signalaufnahmebereich 186 und dem Sensor 180.

Bei dem in Figur 2 gezeigten Ausführungsbeispiel erstreckt sich der Leitbereich 192 im Wesentlichen parallel zur Mittelachse 186 durch den Stator 26 zu dem Sensor 180.

Wenn der Sensor 180 in der zweiten Kammer 20 ausgebildet ist, dann erstreckt sich dieser Leitbereich 192 entsprechend in die zweite Kammer 20.

Das Flussleitelement 184 ist insbesondere als Plättchen ausgebildet mit einer ersten Seite und einer gegenüberliegenden zweiten Seite, zwischen welchen sich das Flussleitelement 184 erstreckt. Die erste Seite und die zweite Seite sind dabei im Wesentlichen eben ausgebildet und liegen parallel zueinander. (In Figur 2 liegen die erste Seite und die zweite Seite parallel zur Zeichenebene.)

Der Signalaufnahmebereich 186 ist vorzugsweise breiter als der Leitbereich 192, um für eine optimierte Signalaufnahme zu sorgen.

durch die Flussleiteinrichtung 185 lässt sich der Sensor 180 an einer geeigneten Stelle in der Umwälzpumpe 10 positionieren; der Sensor 180 muss nicht mehr in unmittelbarer Nähe des Rotors 28 positioniert werden, um eine optimierte Signalaufnahme zu erhalten, sondern kann an der insbesondere für eine einfache Herstellbarkeit geeigneten Stelle positioniert werden.

Erfindungsgemäß wird eine Umwälzpumpe 10 bereitgestellt, bei welcher ein oder mehrere elektronische Leistungsbauelemente 38, welche eine hohe Wärmeproduktion aufweisen, über thermischen Kontakt mit dem Stator 26 (bereitgestellt über die Verbindungsöffnung 92) mittels Förderflüssigkeit kühlbar sind.

Es wird ein Stator 26 bereitgestellt, welcher sich auf einfache Weise herstellen lässt. Über die Spulenmodule 102 können die Spulen 86 mittels einer Wicklungsmaschine auf automatisierte Weise hergestellt werden. Die Spulenmodule 102 wiederum können mit der Motorschaltung 16 über die Kontaktplatine 82 auf automatisierte Weise insbesondere über Schweißung oder Lötung kontaktiert werden.

Dadurch, dass dem (mindestens) einen Sensor 180 des Positionsgebers des elektrisch kommutierten Elektromotors 14 eine Flussleiteinrichtung 185 zugeordnet ist, lässt sich der Sensor 180 an einer insbesondere für die Herstellung des Elektromotors 14 bzw. der Umwälzpumpe 10 optimierten Position anordnen, wobei während des Betriebs des Elektromotors 14 gute Signalhöhe bereitgestellt ist.

## Patentansprüche

1. Spulenmodul für einen Stator (26) eines Elektromotors (14), umfassend einen Spulenhalter (114), eine Spule (86), welche an dem Spulenhalter (114) angeordnet ist, einen ersten Steg (132) und einen zweiten Steg (134), **dadurch** gekkenzeichnet, dass zwischen dem ersten Steg (132) und dem zweiten Steg (134) ein erster Spulenabschnitt (136) und ein zweiter Spulenabschnitt (138) zur Kontaktierung mit einer Motorschaltung (16) liegen, und der erste Spulenabschnitt (136) und der zweite Spulenabschnitt (138) quer zu dem ersten Steg (132) und dem zweiten Steg (134) liegen.

2. Spulenmodul nach Anspruch 1, **dadurch gekennzeichnet, dass** der erste Spulenabschnitt (136) und/oder der zweite Spulenabschnitt (138) an dem ersten Steg (132) und/oder zweiten Steg (134) mittels Wicklung (144a; 144b; 144c; 144d) fixiert ist und insbesondere der erste Steg (132) und/oder der zweite Steg (134) mindestens eine Ausnehmung (145) zur Aufnahme einer Wicklung (144a; 144b; 144c; 144d) aufweisen.

3. Spulenmodul nach Anspruch 1 oder 2, **dadurch gekennzeichnet, dass** der erste Spulenabschnitt (136) und der zweite Spulenabschnitt (138) von oben her mit Kontaktstellen (84a; 84b) elektrisch kontaktierbar sind.

4. Spulenmodul nach einem der vorangehenden Ansprüche, **dadurch gekennzeichnet, dass** der Spulenhalter (114) eine Ausnehmung (124) aufweist, in welche ein Haltestift (96) eintauchbar ist und/oder der Spulenhalter (114) ein Basiselement (116) und ein Deckelelement (118) aufweist, welche die Spule (86) überdecken, wobei insbesondere der erste Steg (132) und der zweite Steg (134) an dem Basiselement (116) angeordnet sind.

5. Stator für einen Elektromotor (14), umfassend einen Rückschlusskörper (74), an dem mindestens ein Spulenmodul (102) gemäß einem der vorangehenden Ansprüche angeordnet ist.

6. Stator nach Anspruch 5, **dadurch gekennzeichnet, dass** der erste Spulenabschnitt (136) und der zweite Spulenabschnitt (138) mit jeweiligen Kontaktstellen (84a; 84b) elektrisch verbunden sind und insbesondere durch Schweißen oder Löten verbunden sind.

7. Stator nach Anspruch 5 oder 6, **dadurch gekennzeichnet, dass** die Kontaktstellen (84a; 84b) an einer Platine (82) angeordnet sind und insbesondere die Platine (82) unterhalb des Rückschlusskörpers (74) angeordnet ist.

8. Stator nach Anspruch 7, **dadurch gekennzeichnet, dass** die Platine (82) dem mindestens einen Spulenmodul (102) zugeordnet mindestens eine Stiftaufnahme (150) und/oder mindestens einen Stift zur Bildung einer Drehsicherungseinrichtung (146) aufweist, wobei mindestens ein Stift (148) des Spulenmoduls (102) in die mindestens eine Stiftaufnahme (150) eingetaucht ist und/oder der mindestens eine Stift der Platine in mindestens eine Stiftaufnahme des Spulenmoduls eingetaucht ist.

9. Stator nach einem der Ansprüche 5 bis 8, **dadurch gekennzeichnet, dass** der Rückschlusskörper (74) mindestens einen Haltestift (96) aufweist, an welchem das mindestens eine Spulenmodul (102) angeordnet ist, wobei insbesondere der Rückschlusskörper (74) eine Mehrzahl von Haltestiften (96) aufweist, welche um eine Achse (36) verteilt angeordnet sind, und wobei insbesondere der mindestens eine Haltestift (96) einen ersten Bereich (100) aufweist, an welchem das zugeordnete Spulenmodul (102) sitzt, und einen zweiten Bereich (104) aufweist, welcher oberhalb des Spulenmoduls (102) liegt.

10. Stator nach Anspruch 9, **dadurch gekennzeichnet, dass** eine Mehrzahl von Haltestiften (96) vorgesehen ist, deren zweite Bereiche (104) als gemeinsame Flächeneinhüllende einen Kugeloberflächenabschnitt aufweisen.

11. Stator nach einem der Ansprüche 5 bis 10, **dadurch gekennzeichnet, dass** eine Haltebasis (76) des Rückschlusskörpers (74) eine Ausnehmung (152) aufweist, in welcher der erste Steg (132) und der zweite Steg (134) des mindestens einen Spulenmoduls (102) liegen, wobei insbesondere die Haltebasis als Ring (78) ausgebildet ist.

12. Elektromotor, umfassend einen Rotor (28) und einen Stator (26) gemäß einem der Ansprüche 5 bis 11, wobei der Stator (26) eine Mehrzahl von Spulenmodulen (102) aufweist.

13. Elektromotor nach Anspruch 12, **dadurch gekennzeichnet, dass** der Rotor (28) über einen oder mehrere Permanentmagnete (176) magnetfelderzeugend ist.

14. Elektromotor nach Anspruch 12 oder 13, **dadurch gekennzeichnet, dass** der Rotor (28) oberhalb der Spulen (86) positioniert ist, wobei insbesondere der Rotor (28) sphärisch gelagert ist, wobei insbesondere der Stator (26) dem Rotor (28) zugewandt mindestens segmentweise sphärisch ausgebildet ist, wobei insbesondere der Rotor (28) einem sphärischen Bereich des Stators (26) zugewandt sphärisch ausgebildet ist.

15. Umwälzpumpe, welch einen Elektromotor (14) gemäß einem der Ansprüche 12 bis 14 aufweist.

## Claims

1. Coil module for a stator (26) of an electric motor (14), comprising a coil holder (114), a coil (86) that is disposed on the coil holder (114), a first web (132) and a second web (134), **characterized in that** situated between the first web (132) and the second web (134) are a first coil portion (136) and a second coil portion (138) for contacting with a motor circuit (16), and the first coil portion (136) and the second coil portion (138) lie transversely of the first web (132) and the second web (134).

2. Coil module according to claim 1, **characterized in that** the first coil portion (136) and/or the second coil portion (138) is fastened to the first web (132) and/or second web (134) by means of winding (144a; 144b; 144c; 144d), and, in particular, the first web (132) and/or the second web (134) have at least one recess (145) for receiving a winding (144a; 144b; 144c; 144d).

3. Coil module according to claim 1 or 2, **characterized in that** the first coil portion (136) and the second coil portion (138) are electrically contactable from above with contact points (84a; 84b).

4. Coil module according to one of the preceding claims, **characterized in that** the coil holder (114) has a recess (124), into which a locating pin (96) can be introduced, and/or the coil holder (114) comprises a base element (116) and a top element (118), which overlap the coil (86), and, in particular, the first web (132) and the second web (134) are disposed on the base element (116).

5. Stator for an electric motor (14), comprising a magnetic return body (74), on which at least one coil module (102) according to one of the preceding claims is disposed.

6. Stator according to claim 5, **characterized in that** the first coil portion (136) and the second coil portion (138) are electrically connected to respective contact points (84a; 84b), and, in particular, are connected by welding or soldering.

7. Stator according to claim 5 or 6, **characterized in that** the contact points (84a; 84b) are disposed on a printed circuit board (82), and, in particular, the printed circuit board (82) is disposed below the magnetic return body (74).

8. Stator according to claim 7, **characterized in that** the printed circuit board (82) has, associated with the at least one coil module (102), at least one pin receiver (150) and/or at least one pin for forming an anti-rotation device (146), wherein at least one pin (148) of the coil module (102) is introduced into the at least one pin receiver (150) and/or the at least one pin of the printed circuit board is introduced into at least one pin receiver of the coil module.

9. Stator according to one of claims 5 to 8, **characterized in that** the magnetic return body (74) has at least one locating pin (96), on which the at least one coil module (102) is disposed, and, in particular, the magnetic return body (74) has a plurality of locating pins (96), which are arranged distributed around an axis (36), and, in particular, the at least one locating pin (96) comprises a first region (100), on which the associated coil module (102) is seated, and a second region (104), which lies outside the coil module (102).

10. Stator according to claim 9, **characterized in that** a plurality of locating pins (96) are provided, the second regions (104) of which have as a common surface envelope a spherical surface segment.

11. Stator according to one of claims 5 to 10, **characterized in that** a holding base (76) of the magnetic return body (74) has a recess (152), in which lie the first web (132) and the second web (134) of the at least one coil module (102), and, in particular, the holding base takes the form of a ring (78).

12. Electric motor, comprising a rotor (28) and a stator (26) according to one of claims 5 to 11, wherein the stator (26) comprises a plurality of coil modules (102).

13. Electric motor according to claim 12, **characterized in that** the rotor (28) by means of one or more permanent magnets (176) is a magnetic field-generating rotor.

14. Electric motor according to claim 12 or 13, **characterized in that** the rotor (28) is positioned above the coils (86), and, in particular, the rotor (28) is spherically mounted, and, in particular, the stator (26) is of a spherical design at least in segments facing the rotor (28), and, in particular, the rotor (28) is of a spherical design facing a spherical region of the stator (26).

15. Circulation pump, which has an electric motor (14) according to one of claims 12 to 14.

## Revendications

1. Module de bobine pour un stator (26) d'un moteur électrique (14), comprenant un porte-bobine (114), une bobine (86) qui est agencée sur le porte-bobine (114), une première barrette (132) et une seconde barrette (134), **caractérisé en ce qu'**un premier tronçon de bobine (134) et un second tronçon de bobine (138) sont disposés entre la première barrette (132) et la seconde barrette (134), pour la mise en contact avec un circuit moteur (16), et le premier tronçon de bobine (136) et le second tronçon de bobine (138) sont disposés perpendiculairement à la première barrette (132) et à la seconde barrette (134).

2. Module de bobine selon la revendication 1, **caractérisé en ce que** le premier tronçon de bobine (136) et/ou le second tronçon de bobine (138) est fixé sur la première barrette (132) et/ou la seconde barrette (134) au moyen d'un enroulement (144a ; 144b ; 144c ; 144d), et en particulier la première barrette (132) et/ou la seconde barrette (134) comprennent au moins un évidement (145) pour la réception d'un enroulement (144a ; 144b ; 144c ; 144d).

3. Module de bobine selon la revendication 1 ou 2, **caractérisé en ce que** le premier tronçon de bobine (136) et le second tronçon de bobine (138) sont susceptibles d'être mis en contact électrique depuis le haut avec des points de contact (84a ; 84b).

4. Module de bobine selon l'une des revendications précédentes, **caractérisé en ce que** le porte-bobine (114) comporte un évidement (124) dans lequel peut plonger une tige de maintien (96) et/ou le porte-bobine (114) comprend un élément de base (116) et un élément de couverture (118), lesquels recouvrent la bobine (86), et en particulier la première barrette (132) et la seconde barrette (134) sont agencées sur l'élément de base (116).

5. Stator pour un moteur électrique (14), comprenant un corps de bouclage (74) sur lequel est agencé au moins un module de bobine (102) selon l'une des revendications précédentes.

6. Stator selon la revendication 5, **caractérisé en ce que** le premier tronçon de bobine (136) et le second tronçon de bobine (138) sont reliés
électriquement à des points de contacts respectifs (84a ; 84b) et en particulier reliés par soudure ou par brasage.

7. Stator selon la revendication 5 ou 6, **caractérisé en ce que** les points de contact (84a ; 84b) sont agencés sur une platine (82), et la platine (82) est en particulier agencée au-dessous du corps de bouclage (74).

8. Stator selon la revendication 7, **caractérisé en ce que** la platine (82) comprend au moins un logement pour ergot (150) et/ou au moins un ergot pour former un système anti-rotation (146), associé audit au moins un module de bobine (102), dans lequel au moins un ergot (148) du module de bobine (102) plonge dans ledit au moins un logement pour ergot (150), et/ou ledit au moins un ergot de la platine plonge dans au moins un logement pour ergot du module de bobine.

9. Stator selon l'une des revendications 5 à 8, **caractérisé en ce que** le corps de bouclage (74) comprend au moins une tige de retenue (96) sur laquelle est agencé ledit au moins un module de bobine (102), et en particulier le corps de bouclage (74) comporte une pluralité de tiges de retenue (96) qui sont agencées en répartition autour d'un axe (36), et en particulier ladite au moins une tige de retenue (96) comporte une première région (100), sur laquelle repose le module de bobine associé (102), et une seconde région (104), qui se trouve au-dessus du module de bobine (102).

10. Stator selon la revendication 9, **caractérisé en ce qu'**il est prévu une pluralité de tiges de retenue (96), dont les secondes régions (104) présentent, à titre d'enveloppante de surface commune, un tronçon de surface sphérique.

11. Stator selon l'une des revendications 5 à 10, **caractérisé en ce qu'**une base de retenue (76) du corps de bouclage (74) comporte un évidement (152) dans lequel sont disposées la première barrette (132) et la seconde barrette (134) dudit au moins un module de bobine (102), et la base de retenue est en particulier réalisé sous forme de bague (78).

12. Moteur électrique comprenant un rotor (28) et un stator (26) selon l'une des revendications 5 à 11, dans lequel le stator (26) comprend une pluralité de modules de bobines (102).

13. Moteur électrique selon la revendication 12, **caractérisé en ce que** le rotor (28) engendre un champ magnétique via au moins un ou plusieurs aimants permanents (176).

14. Moteur électrique selon la revendication 12 ou 13, **caractérisé en ce que** le rotor (28) est positionné au-dessus des bobines (86), et le rotor (28) est monté en particulier de manière sphérique, et le stator (26) est réalisé en particulier de manière sphérique, au moins par segments, tourné vers le rotor (28), et en particulier le rotor (28) est réalisé de manière sphérique et tourné vers une région sphérique du stator (26).

15. Pompe de recirculation qui comprend un moteur électrique (14) selon l'une des revendications 12 à 14.
